# EUROPÄISCHE PATENTSCHRIFT

(11) **EP 1 180 931 B1**
(45) Veröffentlichungstag und Bekanntmachung des Hinweises auf die Patenterteilung: **13.08.2003**
(21) Anmeldenummer: 00931101.0
(22) Anmeldetag: 03.05.2000
(51) Int. Cl.: A01N 25/00, C09B 39/00

(54) **GEFÄRBTE INSEKTIZID-HALTIGE ZUSAMMENSETZUNGEN**
DYED COMPOSITIONS CONTAINING INSECTICIDES
COMPOSITIONS COLOREES A BASE D'INSECTICIDE

(30) Priorität: 14.05.1999 DE 19922406
(43) Veröffentlichungstag der Anmeldung: 27.02.2002
(73) Patentinhaber: S.C.Johnson & Son, Inc., Racine, WI 53403-2236 (US)
(72) Erfinder: BUBLITZ, Mike-Dirk, D-51399 Burscheid (DE); KISTERS, Dietmar, D-47809 Krefeld (DE); HAMPRECHT, Rainer, D-51519 Odenthal (DE)
(74) Vertreter: Ruschke, Hans Edvard, Dipl.-Ing.
(86) Internationale Anmeldenummer: EP0003946
(87) Internationale Veröffentlichungsnummer: WO00069260

(56) Entgegenhaltungen:
- WO-A-99/01030
- DE-A- 19 605 581
- GB-A- 1 308 951
- US-A- 3 978 040
- US-A- 4 045 430
- US-A- 4 315 857
- US-A- 4 582 509

## Beschreibung

Die Erfindung betrifft Insektizid-haltige Zusammensetzungen auf Polymerbasis, die zur Erkennbarkeit des Zeitpunkts der Insektizid-Erschöpfung mindestens einen Farbstoff enthalten, der nach Verdampfung des Insektizids eine andere Farbe besitzt.

Aus WO 97/29 634 und 99/01 030 sind insektizide Zusammensetzungen auf Polymerbasis bekannt, die den Wirkstoff bei erhöhter Temperatur abgeben und zu Formkörpem (sog. "Verdampferplättchen") verarbeitet werden können. Die Insektizide sind mit Hilfe von Heizgeräten verdampfbar; damit ist die Anwendung der Insektizide beliebig zu steuern.

Für Verdampferplättchen auf Cellulosebasis (Pappe) hat man bereits Farbstoffe vorgeschlagen, die das Verarmen des Trägers an Wirkstoff durch Farbwechsel anzeigen. Für insektizide Zusammensetzungen auf Polymerbasis sind derartige Farbstoffe nicht brauchbar.

Eine der Anforderungen, die an Farbstoffe für insektizide Zusammensetzungen auf Polymerbasis gestellt werden, ist eine homogene Verteilbarkeit im Polymer.

Eine andere Anforderung an solche Farbstoffe ist, dass sich mit dem Insektizid keine nachteiligen Wechselwirkungen ergeben. Eines der bevorzugten Insektizide der WO 97/29 634 und 99/01 030 ist Transfluthrin = (1R)-trans-3-(2,2-Dichlorethenyl)-2,2-dimethylcyclopropancarbonsäure-(2,3,5,6-tetrafluorphenyl)-methylester. Die erfindungsgemäß zu verwendenden Farbstoffe sollten also insbesondere mit Transfluthrin harmonisieren und dessen Erschöpfung durch Farbwechsel anzeigen. Zudem sollte dieser Farbwechsel drastisch sein, so dass der Farbumschlag gut zu erkennen ist.

Es wurde nun gefunden, dass o-Cyanazofarbstoffe, die die Einheit 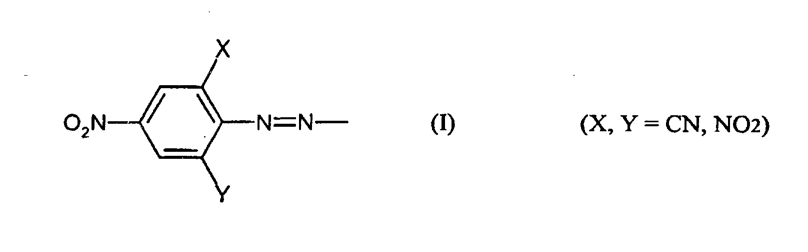 enthalten, für diese Aufgabe hervorragend geeignet sind.

Gegenstand der Erfindung sind Farbstoff-enthaltende insektizide Zusammensetzungen auf Polymerbasis, dadurch gekennzeichnet, dass der Farbstoff mindestens eine Verbindung der Formel 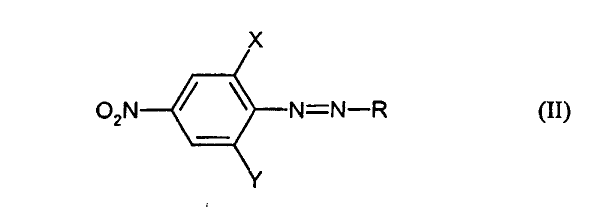 enthält, worin
- X, Y: unabhängig voneinander CN oder NO₂ und
- R: einen gegebenenfalls substituierten aromatischen Rest
bedeuten (mit der Maßgabe, dass nicht X = Y = NO₂ gelten darf).

Die wichtigsten Insektizide für die erfindungsgemäßen Zusammensetzungen sind die Pyrethroide.

Als pyrethroide Wirkstoffe werden bevorzugt verwendet:
1) 3-Allyl-2-methyl-cyclopent-2-en-4-on-1-yl-d/1-cis/trans-chrysanthemat (Allethrin / Pynamin®),
2) 3-Allyl-2-methyl-cyclopent-2-en-4-on-1-yl-d-cis/trans-chrysanthemat (Pynamin forte®),
3) 3-Allyl-2-methyl-cyclopent-2-en-4-on-1-yl-d-trans-chrysanthemat (Bioallethrin®),
4) 2,3,5,6-Tetrafluorbenzyl-(+)-1R-trans-2,2-dimethyl-3-(2,2-dichlorvinyl)-cyclopropancarboxylat (Transfluthrin, Bayothrin®),
5) (S)-3-Propargyl-2-methyl-cyclopent-2-en-4-on-1-yl-(1R)-cis/trans-chrysanthemat (Prallethrin / Etoc®),
oder Mischungen dieser Wirkstoffe.

Besonders bevorzugt werden die Wirkstoffe 3-Allyl-2-methyl-cyclopent-2-en-4-on-1-yl-d-cis/trans-chrysanthemat (Pynamin forte®) und 2,3,5,6-Tetrafluorbenzyl-(+)-1R-trans-2,2-dimethyl-3-(2,2-dichlorvinyl)-cyclopropancarboxylat (Transfluthrin) verwendet.

Die den erfindungsgemäßen Zusammensetzungen zugrundeliegende Polymerbasis enthält mindestens ein Polymer mit einem Erweichungsbereich zwischen 100 und 300, vorzugsweise zwischen 150 und 250, insbesondere zwischen 150 und 200°C.

Der Erweichungsbereich wird bei amorphen thermoplastischen Polymeren durch die Glastemperatur und bei teilkristallinen Polymeren durch die Schmelztemperatur belegt.

Als polymere Materialien werden bevorzugt amorphe und teilkristalline Polymere sowie Mischungen aus beiden verwendet, die sich thermoplastisch, d.h. als zähflüssige Schmelze verarbeiten lassen und deren Erweichungsbereich unterhalb des Siedepunktes der einzuarbeitenden Wirkstoffe bei Normaldruck liegt. Die Polymeren werden für den entsprechenden Wirkstoff so gewählt, dass sich der Wirkstoff zumindest teilweise mit dem Polymeren mischt.

### Als geeignete Polymere werden bevorzugt verwendet:

Weich-PVC, Polystyrol, Styrol/Butadien, Styrol/Acrylnitril, Acrylnitril/Butadien/Styrol, Polymethylacrylat, amorphe Polycycloolefirie, Celluloseester, aromatische Polycarbonate, amorphe aromatische Polyamide, Polyphenylenether, Poly(ether)-sulfone, Polyimide, Polyethylen, Polypropylen, Polybutylen, Polymethylpenten, Hart-PVC, Polyamid, Polyetheramide, Polyesteramide, Polyoxymethylen, Polyethylenterephthalat, Polybutylenterephthalat, Polyimid, Polyether(ether)keton und Polyurethane.

### Bevorzugte Mischungen sind beispielsweise:

Blends aus Polycarbonaten mit Polybutylenterephthalat, Blends aus Polyamid-6 und Styrol/Acrylnitril, Blends aus Polypropylen und Polymethylpenten.

Besonders bevorzugt sind Polypropylen, Poly-4-methyl-1-penten und deren Mischungen.

Den erfindungsgemäßen Zusammensetzungen liegen vorzugsweise Mischungen enthaltend
- A.: 0,1 bis 80, vorzugsweise 0,2 bis 40, insbesondere 0,5 bis 20, speziell bis 12 Gew.-% Transfluthrin 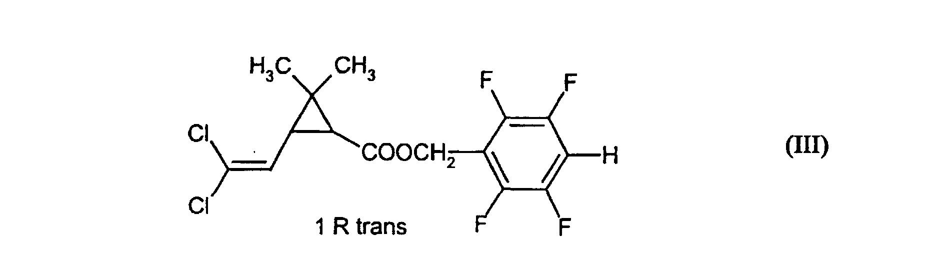 und
- B.: 99,9 bis 20, vorzugsweise 99,8 bis 60, insbesondere 99,5 bis 80, speziell 99 bis 88 Gew.-% Poly-4-methyl-1-penten, das seinerseits bis zur Hälfte, vorzugsweise bis zu einem Drittel, insbesondere bis zu einem Viertel seines Gewichts durch ein anderes Poly-α-olefin ersetzt sein kann,
zugrunde, wobei sich die Prozentangaben jeweils auf die Summe der Komponenten A + B beziehen.

Transfluthrin und ein Verfahren zu seiner Herstellung sind aus der DE-OS 37 05 224 (= EP-PS 279 325) bekannt.

Poly-4-methyl-1-penten B ist ein Polymerisat, vorzugsweise mit einer Glasübergangstemperatur von 50 bis 60°C, einer Erweichungstemperatur, gemessen nach Vicat (ASTM D 1525) von 140 bis 180°C, vorzugsweise 170 bis 175°C und einem Schmelzindex (260°C/5 kg), gemessen nach ASTM D 1238, von 20 bis 200, vorzugsweise 22 bis 35 [g/10 min], das bekanntlich durch Polymerisation von 4-Methyl-1-penten hergestellt werden kann.

Als Poly-α-olefine, die das Poly-4-methyl-1-penten teilweise ersetzen können, kommen hauptsächlich Polyethylene, Polypropylene, Polybutene und Polyisobutene sowie Copolymerisate der den genannten Polymerisaten zugrundeliegenden α-Olefine, wie z.B. Ethylen/Propylen-Copolymerisate, in Frage. Bevorzugte Polypropylene umfassen iso- und/oder syndiotaktische Polypropylene, vorzugsweise mit einer Erweichungstemperatur, gemessen nach Vicat (ISO 306) von 130 bis 170°C, vorzugsweise 140 bis 160°C und einem Schmelzindex (230°C/2 kg), gemessen nach ISO 1133, von 20 bis 40, vorzugsweise 25 bis 35 [g/10 min].

Sofern "andere" Poly-α-olefine mitverwendet werden, kann das Gewichtsverhältnis Poly-4-methyl-1-penten/Poly-α-olefine 70:30 bis 99:1, vorzugsweise 80:20 bis 95:5 betragen.

Für die Verbindung gemäß Formel (II) geeignete Reste R sind Reste von Kupplungskomponenten der Benzol-, Naphthalin-, Indol-, Pyridin- und Tetrahydrochinolinreihe, bevorzugt jedoch N-substituierte p-Aminoarylreste und insbesondere Aniline der Formel

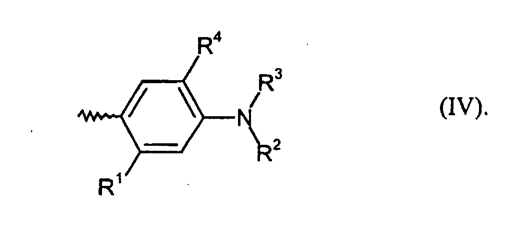

Hierbei bedeuten
- R¹: Wasserstoff, C₁-C₁₈-Alkyl, C₁-C₁₈-Alkoxy, C₆-C₁₆-Aryloxy, C₁-C₁₂-Alkylcarbonylamino, C₆-C₁₂-Ar-C₁-C₄-alkylcarbonylamino, C₅-C₁₂-Cycloalkylcarbonylamino, C₆-C₁₅-Arylcarbonylamino, C₁-C₅-Heterylcarbonylamino, C₁-C₁₂-Alkoxycarbonylamino, C₁-C₁₂-Alkylsulfonylamino, C₆-C₁₅-Arylsulfonylamino, Aminocarbonylamino, CN, CF₃, Carbamoyl, Di-C₁-C₆-alkylaminocarbonyl, C₁-C₁₂-Alkoxycarbonyl, Sulfamoyl, Di-C₁-C₆-alkylaminosulfonyl oder C₁-C₁₂-Alkylsulfonyl,
- R²: Wasserstoff, C₁-C₁₈-Alkyl, C₆-C₁₂-Ar-C₁-C₄-alkyl oder C₆-C₁₅-Aryl,
- R³: Wasserstoff, C₁-C₁₈-Alkyl oder C₆-C₁₂-Ar-C₁-C₄-alkyl, und
- R⁴: Wasserstoff, C₁-C₁₈-Alkyl, C₁-C₁₈-Alkoxy, C₅-C₁₅-Aryloxy, C₆-C₁₂-ArC₁-C₄-alkoxy, Halogen, CN, Carboxyl oder C₁-C₁₂-Alkoxycarbonyl.

Unter den vorstehend im beliebigen Zusammenhang genannten Alkyl- und Alkoxyresten (also z.B. auch Alkylsulfonyl oder Alkoxycarbonyl) sind vorzugsweise solche Reste mit 1 bis 4 C-Atomen zu verstehen, die vorzugsweise einmal durch OH, CN, Halogen, C₁-C₄-Alkoxy, C₂-C₅-Alkylcarbonyloxy oder durch Ammoniumgruppen der Formel 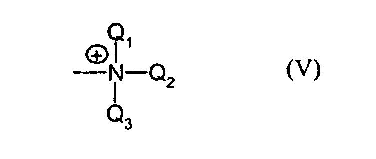 substituiert sind, wobei Q₁, Q₂ und Q₃ C₁-C₆-Alkyl, C₅-C₁₂-Cycloalkyl, C₆-Ar-C₁-C₄-alkyl oder C₆-Aryl bedeuten oder aber die restlichen Glieder eines N-Heterocyclus, wie Pyridin, Imidazol und Triazol bilden, während unter den Aryloder Aryloxyresten vorzugsweise Phenyl- oder Phenoxyreste verstanden werden, die gegebenenfalls einmal durch Cl, Br, NO₂, CN, C₁-C₄-Alkoxy oder C₁-C₄-Alkyl substituiert sind.

Ganz besonders bevorzugte Farbstoffe entsprechen der Formel 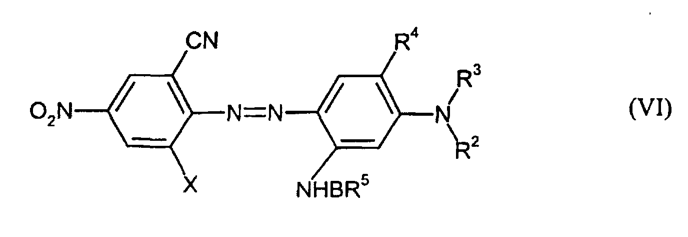 in der
- B: -CO-, -CO₂- oder -SO₂-,
- R5: C₁-C₆-Alkyl, C₆-Ar-C₁-C₄-alkyl, C6-Aryl oder NV¹V²,
- V¹: Wasserstoff, C₁-C₁₈-Alkyl, C₆-Ar-C₁-C₄-alkyl oder C₆-C₁₂-Aryl,
- V²: Wasserstoff, C₁-C₁₈-Alkyl oder C₆-Ar-C₁-C₄-alkyl,
- R²: Wasserstoff, C₁-C₁₈-Alkyl, C₆-Ar-C₁-C₄-alkyl oder C₆-C₁₂-Aryl,
- R³: Wasserstoff, C₁-C₁₈-Alkyl oder C₆-Ar-C₁-C₄-alkyl und
- R⁴: Wasserstoff, C₁-C₁₈-Alkyl, C₁-C₁₈-Alkoxy, C₆-C₁₂-Aryloxy oder C₆-ArC₁-C₄-alkoxy
bedeuten und wobei vorzugsweise die Maßgabe gelten soll, dass B = -CO- oder -SO₂-, wenn R⁵ = NV¹V².

Unter den Alkyl- und Alkoxyresten werden auch hier vorzugsweise solche Reste mit 1 bis 4 C-Atomen verstanden, die vorzugsweise einmal durch OH, CN, Halogen, C₁-C₄-Alkoxy oder C₂-C₅-Alkylcarbonyloxy substituiert sind, während unter den Aryl-oder Aryloxyresten vorzugsweise Phenyl- oder Phenoxyreste verstanden werden, die gegebenenfalls einmal durch Cl, Br, NO₂, CN, C₁-C₄-Alkoxy oder C₁-C₄ Alkyl substituiert sind.

Bevorzugte Farbstoffe für die erfindungsgemäßen Zusammensetzungen entsprechen der Formel 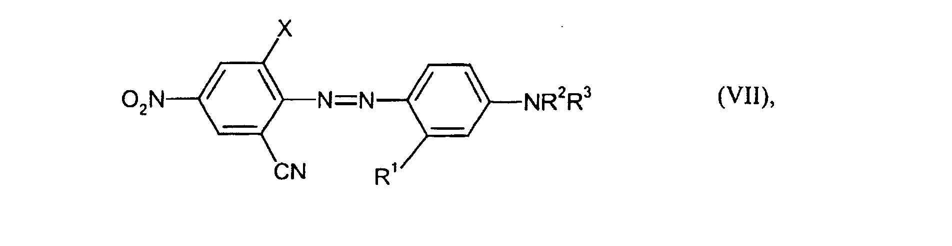 worin
- X: Cyano oder Nitro,
- R²: geradkettiges oder verzweigtes C₁-C₁₀-Alkyl, gegebenenfalls substituiert durch Halogen, OH, Acyloxy, CN oder Phenyl, das wiederum durch C₁-C₄Alkyl oder Halogen substituiert sein kann,
- R³: H und die für R² angegebenen Bedeutungen und
- R³: H, C₁-C₄-Alkyl, C₁-C₈-Acylamino oder C₁-C₄-Alkylsulfonylamino
bedeuten.

Bevorzugt sind solche Farbstoffe der Formel (VII), worin
- R¹: für Methyl oder Acetamino steht.

Besonders bevorzugte Farbstoffe für die erfindungsgemäßen Zusammensetzungen entsprechen den Formeln

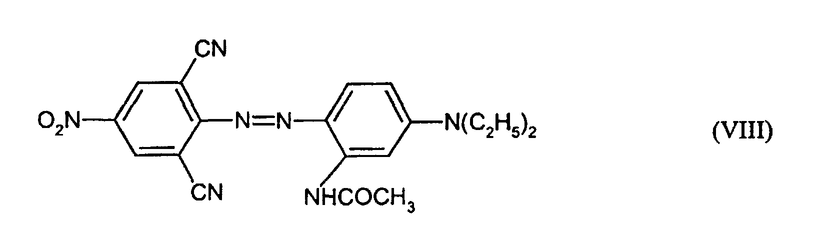

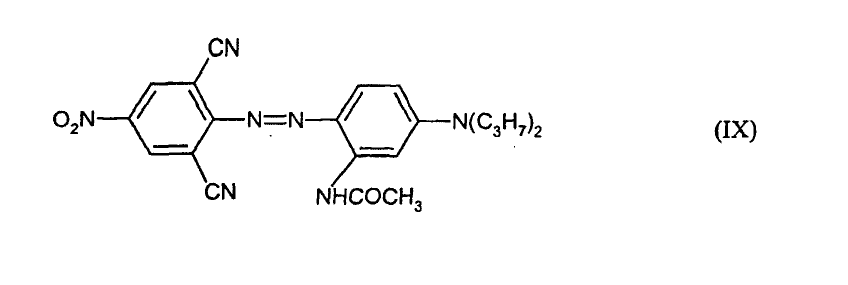

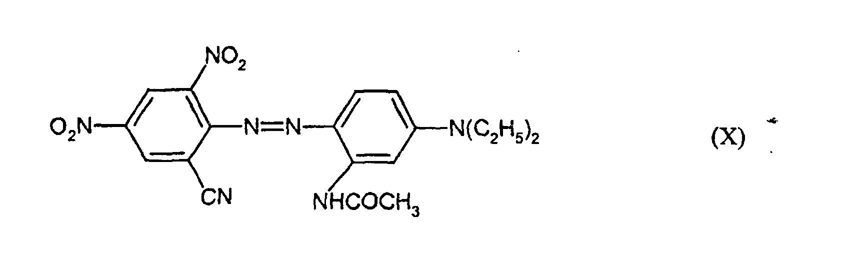

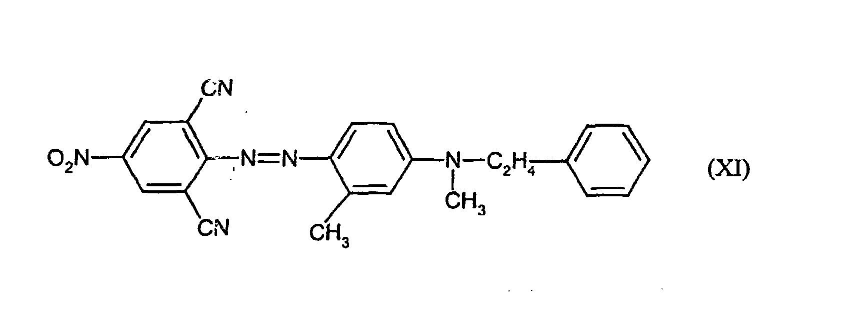

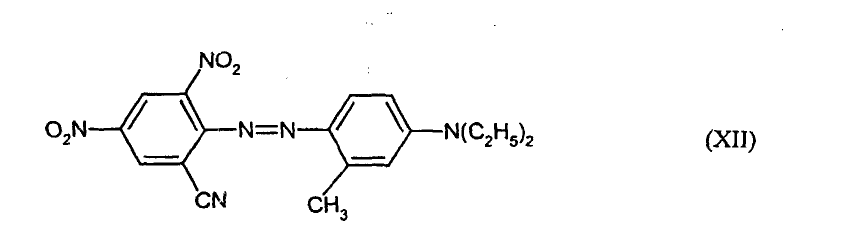

Die Farbstoffe der Formel (II) und Verfahren zu ihrer Herstellung sind bekannt; vgl. z.B. DE-OS 24 56 495, auf deren Offenbarungsgehalt hiermit Bezug genommen wird.

Die meisten der erfindungsgemäß zu verwendenden Farbstoffe färben die insektiziden Polymerzusammensetzungen rotstichig blau bis blau. In der einfachen Erkennbarkeit des Farbumschlags nach Farblos liegt ein besonderer Vorteil der Erfindung.

Die erfindungsgemäßen Zusammensetzungen enthalten 0,001 bis 0,5, vorzugsweise 0,006 bis 0,15, insbesondere 0,024 bis 0,11 Gew.-% Farbstoff (II), bezogen auf die Summe aus Insektizid und Polymer.

Die erfindungsgemäßen Zusammensetzungen enthalten im allgemeinen zwischen 0,1 und 80, vorzugsweise zwischen 0,2 und 40, besonders bevorzugt zwischen 1,0 und 20 Gew.-% Insektizid, bezogen auf die Summe aus Insektizid und Polymer.

Als Zuschlagstoffe können Modifizierungsmittel und/oder Füll- und Verstärkungsstoffe und/oder Verarbeitungshilfsmittel verwendet werden wie beispielsweise Nukleierhilfsmittel, Weichmacher, Entformungsmittel, Flammschutzmittel, Schlagzähmodifikatoren, Stabilisatoren oder sonst im Thermoplastbereich übliche Zusatzmittel. Vorzugsweise werden Füllstoffe verwendet, wie sie in Encyclopedia of Polymer Science and Engineering, Vol. 7, pp. 53-73 (1985) beschrieben sind.

Als Füll- und Verstärkungsstoffe können Mineralien wie beispielsweise Gips, Kalk, Glasfasern, Sand, Titan(IV)oxid,vorzugsweise Glasfasern, verwendet werden.

Die Menge der Zuschlagstoffe kann innerhalb weiter Grenzen schwanken; im allgemeinen beträgt sie 1 bis 80, vorzugsweise 0,2 bis 50 und insbesondere 0,5 bis 30 Gew.-%, bezogen auf Zuschlagstoff-enthaltende erfindungsgemäße Zusammensetzung.

Die erfindungsgemäßen Zusammensetzungen können hergestellt werden, indem das Polymer als Granulat oder Pulver in einen geeigneten Kneter oder Extruder eingebracht und plastifiziert wird. Unter den für das Polymer typischen Plastifizierbedingungen und -temperaturen können Insektizid und Farbstoff über eine geeignete Dosiervorrichtung direkt in die Polymerschmelze eingebracht und gleichmäßig verteilt werden.

Die Wirkstoff enthaltenden Polymeren können auf verschiedene Arten granuliert werden. Entweder schneidet man z.B. extrudierte und ganz oder teilweise abgekühlte Stränge (Stranggranulation) oder aber man schneidet die heiße Schmelze direkt beim Austritt aus der Düse vor dem Kopf (z.B. Wasserringgranulation).

Die hergestellten Insektizid-haltigen Granulate können thermoplastisch zu Formteilen weiterverarbeitet oder mit weiterem Polymerisat zu Mischungen verarbeitet werden (Masterbatch).

Zur Formgebung können die üblichen bei Kunststoffen anzuwendenden Verfahren, wie z.B. Spritzgußverarbeitung, Extrusionsblasen, Folienextrusion oder Tiefziehen, verwendet werden.

Die erfindungsgemäßen Zusammensetzungen können in Form von Verdampferplättchen in konventionellen Verdampfergeräten, wie sie z.B. für Cellulose-Verdampferplättchen verwendet werden, zum Einsatz kommen. Arbeitstemperaturen von 60 bis 180°C, vorzugsweise 130 bis 170°C gewährleisten eine lang anhaltende, relativ gleichmäßige Wirkstoffabgabe an die Umgebung.

Ein weiterer Gegenstand der Erfindung ist die Verwendung der erfindungsgemäßen Zusammensetzungen zur Bekämpfung von Insekten, wie z.B. Fliegen und Mücken.

Die Prozentangaben der nachfolgenden Beispiele beziehen sich jeweils auf das Gewicht.

### Beispiele

### Beispiel 1 Herstellung Polymer-Wirkstoffgranulat

1.1 Extrusionsbedingungen:
   - Extruder:: Brabender PL 2000 Doppelschneckenextruder (35/17D), Schneckentyp S
   - Bedingungen:: Temperatur 280/280/270/280°C, --100U/min-- 6kg/h
   - Schneckenfüllung:: ca. 250 g
1.2 Vorbereitungen:
   A. Polymer TPX RT 18 (s. Beispiel 3) und Farbstoff auf einem Engelmanns Röhnradmischer, Typ Elte 650, in 5 L Kunststoffbehälter homogenisieren (3 kg/Behälter)
   B. Das BHT (= Butylhydroxytoluol) wird im Transfluthrin in der Wärme gelöst (ca. 50°C) anschließend die Lösung über Glasfritte G4 filtrieren.
1.3 Dosierung:
   TPX RT 18 und Farbstoff wird über eine Dosierwaage, Firma Engelhardt Typ 150, und Transfluthrin / BHT mit einer Zahnradpumpe, Firme Ismatec Typ MV-Z (Leitung beheizt mit Schleichdampf), in den Extruder gleichzeitig dosiert.
1.4 Granulierung:
   Der Strang wird über ein Wasserbad (2,5 m lang) abgezogen, über eine Wasserabsaugstrecke (Eigenbau) vorgetrocknet und mit einem Granulator der Firma Scheer, Typ SGS 50-E, granuliert. Der Anfahrverlust beträgt ca. 300 g.

### Beispiel 2 Spritzguß

- Abmischung:: 100 % Wirkstoffgranulat

2.1 Spritzgußbedingungen
   - Maschine:: Arburg 320 - 210 - 850, Einwellenschnecke ∅ 35 mm, Schneckenfüllung ca. 125g (enspricht 5 Schuß)
   - Temperaturprofil:: 250°C (Düse) / 265°C / 270°C / 280°C (umgekehrtes Temperaturprofil)
   - Zykluszeit:: 15 sec
   - Werkzeugtemperatur:: 30°C
   - Werkzeug:: Kaltkanal, 12-fach Werkzeug, anspritzen über Tunnelanguß
   - Trocknung Produkt:: ca. 15 h bei 50°C im Vakuumtrockenschrank
   - Vorlauf:: 10 Schuß ä 25 g
   - Anguß-Recycling:: 10 - 15 % Zumischung sind möglich.

Abmessungen der Polymer-Verdampferplättchen: 34 mm x 22 mm x 2,5 mm.

### Beispiel 3 Rezepturen der Polymerplättchem mit Farbstoffen

Die folgenden Polymer-Verdampferplättchen wurden nach dem o.g. Verfahen hergestellt.

| Beispiel | Zusammensetzung | Menge (%) |
|---|---|---|
| 3.1 | TPX* | 91.261 |
| | Transfluthrin (Al₂O₃ gewaschen) | 8.300 |
| | BHT** | 0.415 |
| | Farbstoff XII | 0.024 |
| 3.2 | TPX* | 91.261 |
| | Transfluthrin (Al₂O₃ gewaschen) | 8.300 |
| | BHT** | 0.415 |
| | Farbstoff XII | 0.024 |
| 3.3 | TPX* | 91.255 |
| | Transfluthrin (Al₂O₃ gewaschen) | 8.300 |
| | BHT** | 0.415 |
| | Farbstoff XII | 0.030 |
| 3.4 | TPX | 91.040 |
| | Transfluthrin | 8.300 |
| | BHT | 0.415 |
| | Titandioxid (®Bayertitan R-FK-2) | 0.200 |
| | Farbstoff XII | 0.040 |
| 3.5 | TPX | 91.245 |
| | Transfluthrin | 8.300 |
| | BHT | 0.415 |
| | Farbstoff XII | 0.040 |

| | | |
|---|---|---|
| * TPX = Poly-4-methy-1-penten der Fa. Mitsui (Polymethylpenten TPX RT 18) | | |
| ** BHT = Butylhydroxytoluol | | |

### Beispiel 4 Test der Farbumschläge

Die nachstehende Methode beschreibt den Test der Endpunktanzeige (Farbumschlag) von Polymer-Verdampferplättchen durch visuelle Beurteilung der Farbveränderung der Plättchen.

Pro Versuch werden mindestens 3 Testplättchen verwendet. Die Testplättchen werden in die vorgesehenen Heizgeräte so eingeschoben, dass sie mittig auf dem Heizblock des jeweiligen Gerätes aufliegen. Danach werden die Heizgeräte mit den Testplättchen in die ausgeschalteten Steckerleisten eingesteckt.

Die Zeitschaltuhren werden auf die definierte Testzeit eingestellt.

Von den möglichen Testzeitmodellen

| | | |
|---|---|---|
| a. | 8 h Abdampfzeit / Tag | 1 Zyklus |
| b. | 24 h Abdampfzeit / Tag | 3 Zyklen |

wurde vorzugsweise Modell a verwandt.

Nach Ablauf der jeweils definierten Abdampfzeit werden alle Plättchen von den Heizgeräten entfernt und mit einem unbehandelten Referenzmuster hinsichtlich einer Farbveränderung visuell geprüft.

Die Endpunkterkennung ist gewährleistet, wenn sich die Farbgebung des verwendeten Prüfproduktes von der des noch unbenutzten Produktes deutlich sichtbar unterscheidet, zum Beispiel:
- Umschlag von dunkelblau nach bernsteinfarben.
- Deutliches Verblassen der Färbung des Prüfproduktes.

Bewertung der Verdampferplättchen aus Beispiel 3

| Beispiel | Rezeptur Nr. | Bewertung |
|---|---|---|
| 4.1 | 3.1 | ++ |
| 4.2 | 3.2 | ++ |
| 4.3 | 3.3 | + |
| 4.5 | 3.5 | ++ |
| + Entfärbung gut sichtbar | | |
| ++ Entfärbung sehr gut sichtbar | | |

## Patentansprüche

1. Farbstoff enthaltende insektizide Zusammensetzungen auf Polymerbasis, **dadurch gekennzeichnet, dass** der Farbstoff mindestens eine Verbindung der Formel 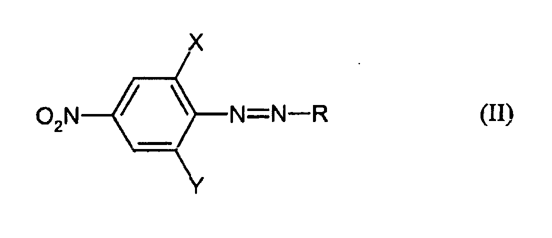 enthält, worin
X, Y unabhängig voneinander CN oder NO₂ und
R einen gegebenenfalls substituierten aromatischen Rest
bedeuten, mit der Maßgabe, dass nicht X = Y = NO₂ gelten darf.

2. Zusammensetzungen nach Anspruch 1, worin R in Formel (II) für 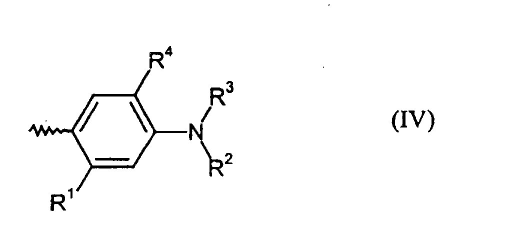 steht, worin
R¹ Wasserstoff, C₁-C₁₈-Alkyl, C₁-C₁₈-Alkoxy, C₆-C₁₆-Aryloxy, C₁-C₁₂-Alkylcarbonylamino, C₆-C₁₂-Ar-C₁-C₄-alkylcarbonylamino, C₅-C₁₂-Cycloalkylcarbonylamino, C₆-C₁₅-Arylcarbonylamino, C₁-C₅-Heterylcarbonylamino, C ₁-C₁₂-Alkoxycarbonylamino, C₁-C₁₂-Alkylsulfonylamino, C₆-C₁₅-Arylsulfonylamino, Amino-carbonylamino, CN, CF₃, Carbamoyl, Di-C₁-C₆-alkylaminocarbonyl, C₁-C₁₂-Alkoxycarbonyl, Sulfamoyl, Di-C₁-C₆-alkylaminosulfonyl oder C₁-C₁₂-Alkylsulfonyl,
R² Wasserstoff, C₁-C₁₈-Alkyl, C₆-C₁₂-Ar-C₁-C₄-alkyl oder C₆-C₁₅-Aryl,
R³ Wasserstoff, C₁-C₁₈-Alkyl oder C₆-C₁₂-Ar-C₁-C₄-alkyl und
R⁴ Wasserstoff, C₁-C₁₈-Alkyl, C₁-C₁₈-Alkoxy, C₅-C₁₅-Aryloxy, C₆-C₁₂-Ar-C₁-C₄-alkoxy, Halogen, CN, Carboxyl oder C₁-C₁₂-Alkoxycarbonyl bedeuten

3. Zusammensetzungen nach Anspruch 1, worin der Farbstoff mindestens eine Verbindung der Formel 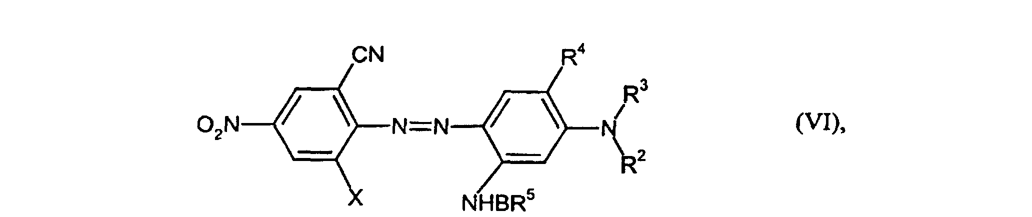 enthält, worin
B -CO-, -CO₂- oder -SO₂-,
R5 C₁-C₆-Alkyl, C₆-Ar-C₁-C₄-alkyl, C₆-Aryl oder NV¹V²,
V¹ Wasserstoff, C₁-C₁₈-Alkyl, C₆-Ar-C₁-C₄-alkyl oder C₆-C₁₂-Aryl,
V² Wasserstoff, C₁-C₁₈-Alkyl oder C₆-Ar-C₁-C₄-alkyl,
R² Wasserstoff, C₁-C₁₈-Alkyl, C₆-Ar-C₁-C₄-alkyl oder C₆-C₁₂-Aryl,
R³ Wasserstoff, C₁-C₁₈-Alkyl oder C₆-Ar-C₁-C₄-alkyl und
R⁴ Wasserstoff, C₁-C₁₈-Alkyl, C₁-C₁₈-Alkoxy, C₆-C₁₂-Aryloxy oder C₆-Ar-C₁-C₄-alkoxy bedeuten und wobei vorzugsweise die Maßgabe gelten soll, dass B = -CO- oder -SO₂- wenn R⁵ = NV¹V² bedeuten.

4. Zusammensetzungen nach Anspruch 1, worin der Farbstoff mindestens eine Verbindung der Formel 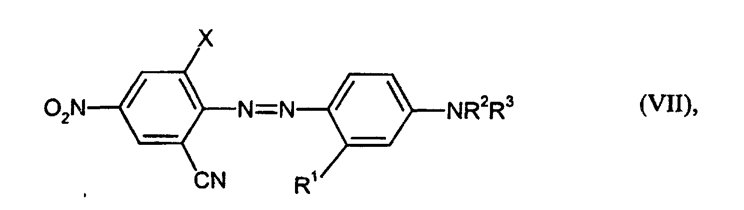 enthält, worin
X Cyano oder Nitro,
R² geradkettiges oder verzweigtes C₁-C₁₀-Alkyl, gegebenenfalls substituiert durch Halogen, OH, Acyloxy, CN oder Phenyl, das wiederum durch C₁-C₄-Alkyl oder Halogen substituiert sein kann,
R³ H und die für R² angegebenen Bedeutungen und
R¹ H, C₁-C₄-Alkyl, C₁-C₈-Acylamino oder C₁-C₄-Alkylsulfonylamino
bedeuten.

5. Zusammensetzungen nach Anspruch 4, worin
R² für geradkettiges C₁-C₄-Alkyl oder Phenylpropyl,
R³ für geradkettiges C₁-C₄-Alkyl und
R¹ für Methyl oder C₁-C₄-Acylamino stehen.

6. Zusammensetzungen nach Anspruch 1, worin das Insektizid Transfluthrin ist.

7. Zusammensetzungen nach Anspruch 1, worin das Polymer Polymethylpenten ist.

8. Zusammensetzungen nach Anspruch 1, die 0,001 bis 0,5 Gew.-% Farbstoff der Formel (II), 0,1 bis 80 Gew.-% Insektizid und 1 bis 80 Gew.-% Polymer, jeweils bezogen auf die Summe von Insektizid und Polymer, enthalten.

9. Verwendung der Zusammensetzungen nach einem der vorhergehenden Ansprüche zur Bekämpfung von Insekten.

## Claims

1. Dye-comprising polymer-based insecticidal compositions, **characterized in that** the dye comprises at least one compound of the formula 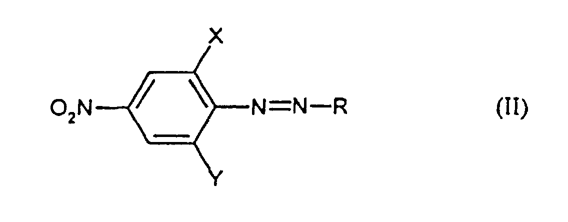 in which
X, Y independently of one another represent CN or NO₂ and
R represents an optionally substituted aromatic radical,
with the proviso that X = Y = NO₂ must not apply.

2. Compositions according to Claim 1 where R in formula (II) represents 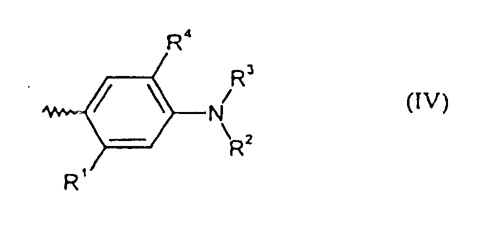 in which
R' represents hydrogen, C₁-C₁₈-alkyl, C₁-C₁₈-alkoxy, C₆-C₁₆-aryloxy, C₁-C₁₂-alkylcarbonylamino, C₆-C₁₂-Ar-C₁-C₄-alkylcarbonylamino, C₅-C₁₂-cycloalkylcarbonylamino, C₆-C₁₅-arylcarbonylamino, C₁-C₅-heteroylcarbonylamino, C₁-C₁₂-alkoxycarbonylamino, C₁-C₁₂-alkylsulphonylamino, C₆-C₁₅-arylsulphonylamino, aminocarbonylamino, CN, CF₃, carbamoyl, di-C₁-C₆-alkylaminocarbonyl, C₁-C₁₂-alkoxycarbonyl, sulphamoyl, di-C₁-C₆-alkylaminosulphonyl or C₁-C₁₂-alkylsulphonyl,
R² represents hydrogen, C₁-C₁₈-alkyl, C₆-C₁₂-Ar-C₁-C₄-alkyl or C₆-C₁₅-aryl,
R³ represents hydrogen, C₁-C₁₈-alkyl or C₆-C₁₂-Ar-C₁-C₄-alkyl, and
R⁴ represents hydrogen, C₁-C₁₈-alkyl, C₁-C₁₈-alkoxy, C₅-C₁₅-aryloxy, C₆-C₁₂-Ar-C₁-C₄-alkoxy, halogen, CN, carboxyl or C₁-C₁₂-alkoxycarbonyl.

3. Compositions according to Claim 1, in which the dye comprises at least one compound of the formula 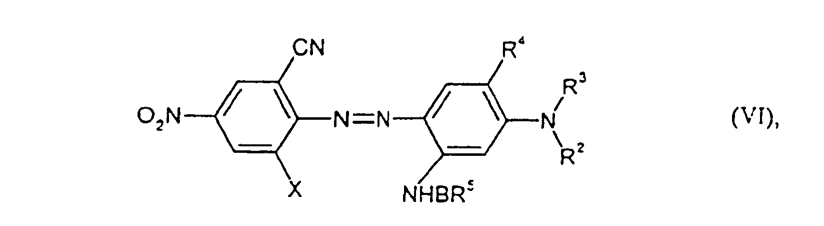 in which
B represents -CO-, -CO₂- or -SO₂-,
R⁵ represents C₁-C₆-alkyl, C₆-Ar-C₁-C₄-alkyl, C₆-aryl or NV¹V²,
V' represents hydrogen, C₁-C₁₈-alkyl, C₆-Ar-C₁-C₄-alkyl or C₆-C₁₂-aryl,
V² represents hydrogen, C₁-C₁₈-alkyl or C₆-Ar-C₁-C₄-alkyl,
R² represents hydrogen, C₁-C₁₈-alkyl, C₆-Ar-C₁-C₄-alkyl or C₆-C₁₂-aryl,
R³ represents hydrogen, C₁-C₁₈-alkyl or C₆-Ar-C₁-C₄-alkyl and
R⁴ represents hydrogen, C₁-C₁₈-alkyl, C₁-C₁₈-alkoxy, C₆-C₁₂-aryloxy or C₆-Ar-C₁-C₄-alkoxy and, preferably, with the proviso that, if R⁵ = NV¹V², then B = -CO- or -SO₂-.

4. Compositions according to Claim 1, in which the dye comprises at least one compound of the formula 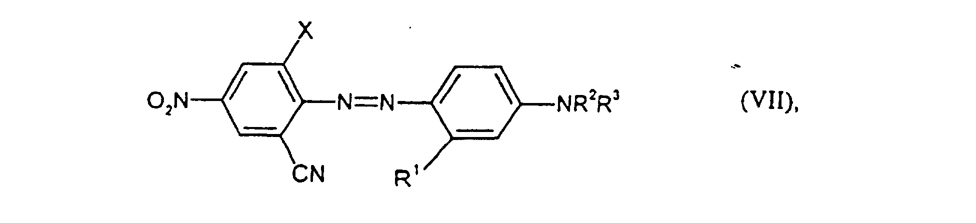 in which
X represents cyano or nitro,
R² represents straight-chain or branched C₁-C₁₀-alkyl, optionally substituted by halogen, OH, acyloxy, CN or phenyl which, in turn, can be substituted by C₁-C₄-alkyl or halogen,
R³ represents H and the meanings given for R² and
R¹ represents H, C₁-C₄-alkyl, C₁-C₈-acylamino or C₁-C₄-alkylsulphonylamino.

5. Compositions according to Claim 4, in which
R² represents straight-chain C₁-C₄-alkyl or phenylpropyl,
R³ represents straight-chain C₁-C₄-alkyl and
R¹ represents methyl or C₁-C₄-acylamino.

6. Compositions according to Claim 1, in which the insecticide is transfluthrin.

7. Compositions according to Claim 1, in which the polymer is polymethylpentene.

8. Compositions according to Claim 1 which comprise 0.001 to 0.5% by weight of dye of the formula (II), 0.1 to 80% by weight of insecticide and 1 to 80% by weight of polymer, in each case based on the total of insecticide and polymer.

9. Use of the compositions according to any of the preceding claims for controlling insects.

## Revendications

1. Compositions insecticides à base de polymère contenant un colorant **caractérisées en ce que** le colorant contient au moins un composé de formule 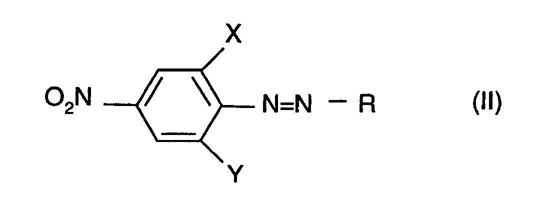 où
X, Y représentent indépendamment l'un de l'autre CN ou NO₂ et
R représente un reste aromatique éventuellement substitué, à condition que X et Y ne représentent pas NO₂ en même temps.

2. Compositions selon la revendication 1 où R dans la forme (II) représente : 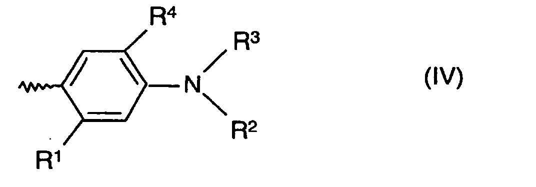 où
R¹ représente l'hydrogène, alkyle en C₁-C₁₈, alcoxy en C₁-C₁₈, aryloxy en C₆-C₁₆, alkyle en C₁-C₁₂-carbonylamino, Ar en C₆-C₁₂-alkyle en C₁-C₄-carbonylamino, cycloalkyle en C₅-C₁₂-carbonylamino, aryle en C₆-C₁₅-carbonylamino, hétéroaryle en C₁-C₅-carbonylamino, alcoxy en C₁-C₁₂-carbonylamino, alkyle en C₁-C₁₂-sulfonylamino, aryle en C₆-C₁₅-sulfonylamino, aminocarbonylamino, CN, CF₃, carbamoyle, di-alkyle en C₁-C₆-aminocarbonyle, alcoxy en C₁-C₁₂-carbonyle, sulfamoyle, di-alkyle en C₁-C₆-aminosulfonyle ou alkyle en C₁-C₁₂-sulfonyle,
R² représente l'hydrogène, alkyle en C₁-C₁₈, Ar en C₆-C₁₂-alkyle en C₁-C₄ ou aryle en C₆-C₁₅,
R³ représente l'hydrogène, alkyle en C₆-C₁₈ ou Ar en C₆-C₁₂-alkyle en C₁-C₄ et
R⁴ représente l'hydrogène, alkyle en C₁-C₁₈, alcoxy en C₁-C₁₈, aryloxy en C₅-C₁₅, Ar en C₆-C₁₂-alcoxy en C₁-C₄, halogène, CN, carboxyle ou alcoxy en C₁-C₁₂-carbonyle.

3. Compositions selon la revendication 1, où le colorant contient au moins un composé de formule 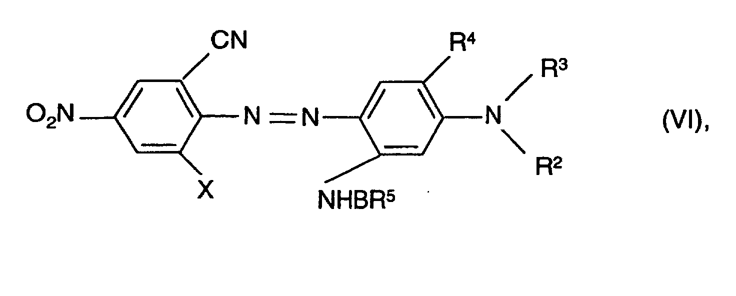 où
B représente -CO-, -CO₂- ou -SO₂-,
R⁵ représente alkyle en C₁-C₆, Ar en C₆-alkyle en C₁-C₄, aryle en C₆ ou NV¹V²,
V¹ représente l'hydrogène, alkyle en C₁-C₁₈, Ar en C₆-alkyle en C₁-C₄ ou aryle en C₆-C₁₂,
V² représente l'hydrogène, alkyle en C₁-C₁₈ ou Ar en C₆-alkyle en C₁-C₄,
R² représente l'hydrogène, alkyle en C₁-C₁₈, Ar en C₆-alkyle en C₁-C₄ ou aryle en C₆-C₁₂,
R³ représente l'hydrogène, alkyle en C₁-C₁₈ ou Ar en C₆-alkyle en C₁-C₄ et
R⁴ représente l'hydrogène, alkyle en C₁-C₁₈, alcoxy en C₁-C₁₈, aryloxy en C₆-C₁₂ ou Ar en C₆-alcoxy en C₁-C₄ et de préférence à condition que B=-CO- ou -SO₂- quand R⁵=NV¹V².

4. Compositions selon la revendication 1, où le colorant contient au moins un composé de formule 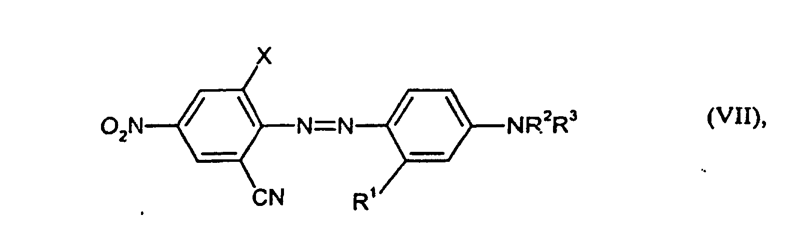 où
X représente cyano ou nitro,
R² représente alkyle en C₁-C₁₀, linéaire ou ramifié, éventuellement substitué par halogène, OH, acyloxy, CN ou phényle, qui peut être substitué pour sa part par alkyle en C₁-C₄ ou halogène.
R³ représente H et a les significations indiquées pour R² et
R¹ représente H, alkyle en C₁-C₄, acylamino en C₁-C₈ ou alkyle en C₁-C₄-sulfonylamino.

5. Compositions selon la revendication 4, où
R² représente alkyle en C₁-C₄ linéaire ou phénylpropyle,
R³ représente alkyle en C₁-C₄ linéaire et
R¹ représente méthyle ou acylamino en C₁-C₄.

6. Compositions selon la revendication 1 où l'insecticide est la transfluthrine.

7. Compositions selon la revendication 1 où le polymère est le polyméthylpentène.

8. Compositions selon la revendication 1 qui contiennent 0,001 à 0,5 % en masse de colorant de formule (II), 0,1 à 80 % en masse d'insecticide et 1 à 80 % en masse de polymère, dans chaque cas par rapport à la somme de l'insecticide et du polymère.

9. Utilisation des compositions selon l'une des revendications précédentes pour la lutte contre les insectes.
